# EUROPÄISCHE PATENTSCHRIFT

(11) **EP 1 511 215 B1**
(45) Veröffentlichungstag und Bekanntmachung des Hinweises auf die Patenterteilung: **31.03.2010**
(21) Anmeldenummer: 04028376.4
(22) Anmeldetag: 06.02.2002
(51) Int. Cl.: H04L 1/18

(54) **Verfahren und Vorrichtung zur Datenübertragung gemä einem Hybrid-ARQ-Verfahren**
Method and device for transmitting data according to a hybrid ARQ method
Procédé et dispositif de transmission de données selon un procédé ARQ hybride

(30) Priorität: 19.02.2001 DE 10107703
(43) Veröffentlichungstag der Anmeldung: 02.03.2005
(62) Teilanmeldung aus: 02704628.3
(73) Patentinhaber: SIEMENS AKTIENGESELLSCHAFT, 80333 München (DE)
(72) Erfinder: Michel, Jürgen, Dr., 81737 München (DE); Raaf, Bernhard, 82061 Neuried (DE)

(56) Entgegenhaltungen:
- "Universal Mobile Telecommunications System (UMTS); Multiplexing and channel coding (FDD)" ETSI TS 125 212 V3.5.0, Dezember 2000 (2000-12), Seiten 23-42, XP002197886
- ROWITCH D N ET AL: "ON THE PERFORMANCE OF HYBRID FEC/ARQ SYSTEMS USING RATE COMPATIBLE PUNCTURED TURBO (RCPT) CODES" IEEE TRANSACTIONS ON COMMUNICATIONS, IEEE INC. NEW YORK, US, Bd. 48, Nr. 6, Juni 2000 (2000-06), Seiten 948-959, XP000954425 ISSN: 0090-6778
- SIM JI-SEOB ET AL: "Adaptive hybrid ARQ scheme using concatenated FEC for ATM over wireless links" ELECTRONICS LETTERS, IEE STEVENAGE, GB, Bd. 34, Nr. 24, 26. November 1998 (1998-11-26), Seiten 2303-2304, XP006010654 ISSN: 0013-5194
- "Universal Mobile Telecommunications System (UMTS); RLC protocol specification" ETSI TS 25.322 V3.5.0, Dezember 2000 (2000-12), Seiten 7-13, XP002322110

## Beschreibung

Die vorliegende Erfindung betrifft ein Verfahren sowie eine entsprechend ausgestaltete Vorrichtung zur Datenübertragung gemäß einem Hybrid-ARQ-Verfahren in einem Kommunikationssystem, insbesondere einem Mobilfunksystem.

Insbesondere in Verbindung mit Mobilfunksystemen wird häufig die Verwendung sogenannter Paketzugriffsverfahren bzw. paketorientierter Datenverbindungen vorgeschlagen, da die aufkommenden Nachrichtentypen häufig einen sehr hohen Burstfaktor besitzen, so dass nur kurze Aktivitätsperioden existieren, die von langen Ruhephasen unterbrochen sind. Paketorientierte Datenverbindungen können in diesem Fall die Effizienz im Vergleich mit anderen Datenübertragungsverfahren, bei denen ein kontinuierlicher Datenstrom vorhanden ist, erheblich steigern, da bei Datenübertragungsverfahren mit einem kontinuierlichen Datenstrom eine einmal zugeteilte Ressource, wie z. B. eine Trägerfrequenz oder ein Zeitschlitz, während der gesamten Kommunikationsbeziehung zugeteilt bleibt, d.h. eine Ressource bleibt auch dann belegt, wenn momentan keine Datenübertragungen anliegen, so dass diese Ressource für andere Netzteilnehmer nicht zur Verfügung steht. Dies führt zu einer nicht optimalen Nutzung des knappen Frequenzspektrums für Mobilfunksysteme.

Zukünftige Mobilfunksysteme, wie beispielsweise gemäß dem UMTS-Mobilfunkstandard ("Universal Mobile Telecommunications System"), werden eine Vielzahl unterschiedlicher Dienste anbieten, wobei neben der reinen Sprachübertragung Multimedia-Anwendungen zunehmend an Bedeutung gewinnen werden. Die damit einhergehende Dienstevielfalt mit unterschiedlichen Übertragungsraten erfordert ein sehr flexibles Zugriffsprotokoll auf der Luftschnittstelle zukünftiger Mobilfunksysteme. Paketorientierte Datenübertragungsverfahren haben sich hier als sehr geeignet erwiesen.

Im Zusammenhang mit UMTS-Mobilfunksystemen wurde bei paketorientierten Datenverbindungen ein sogenanntes ARQ-Verfahren ("Automatic Repeat Request") vorgeschlagen. Dabei werden die von einem Sender an einen Empfänger übertragenen Datenpakete empfängerseitig nach ihrer Dekodierung hinsichtlich ihrer Qualität überprüft. Ist ein empfangenes Datenpaket fehlerhaft, fordert der Empfänger eine erneute Übertragung dieses Datenpakets von dem Sender an, d.h. es wird ein Wiederholungsdatenpaket von dem Sender an den Empfänger gesendet, welches mit dem zuvor gesendeten und fehlerhaft empfangenen Datenpaket identisch bzw. teilweise identisch ist (je nach dem, ob das Wiederholungsdatenpaket weniger oder gleich viele Daten wie das ursprüngliche Datenpaket enthält, wird von einer vollen oder einer partiellen Wiederholung gesprochen). Hinsichtlich des für den UMTS-Mobilfunkstandard vorgeschlagenen ARQ-Verfahrens ist sowohl die Übertragung von Daten als auch von sogenannten Headerinformationen in einem Datenpaket vorgesehen, wobei die Headerinformationen auch Informationen zur Fehlerüberprüfung, wie beispielsweise CRC-Bits ("Cyclic Redundancy Check") aufweisen, und auch zur Fehlerkorrektur codiert sein können (sog. FEC, Forward Error Correction).

Gemäß den derzeitigen Vorschlägen der UMTS-Spezifikation ist die Einführung eines sogenannten Hybrid-ARQ-Verfahrens vorgesehen, welches auch als "Incremental Redundancy"-ARQ-Verfahren bezeichnet wird. Der Hauptunterschied zu dem zuvor beschriebenen herkömmlichen ARQ-Verfahren ist, dass im Empfänger eine Codierung unter Verwendung mehrerer Datenpakete mit gleichem Informationsursprung, aber unterschiedlicher Kanalcodierung durchgeführt wird. D.h. es werden mehrere Datenpakete mit gleichem Informationsursprung decodiert und ausgewertet, bis ein ursprünglich übertragenes Datenpaket im Empfänger als fehlerfrei decodiert gilt. Im Gegensatz zu dem zuvor beschriebenen ARQ-Verfahren sind bei dem Hybrid-ARQ-Verfahren die Wiederholungsdatenpakete (welche auch als "Retransmission" bezeichnet werden) typischerweise nicht mit dem ursprünglich gesendeten Datenpaket identisch.

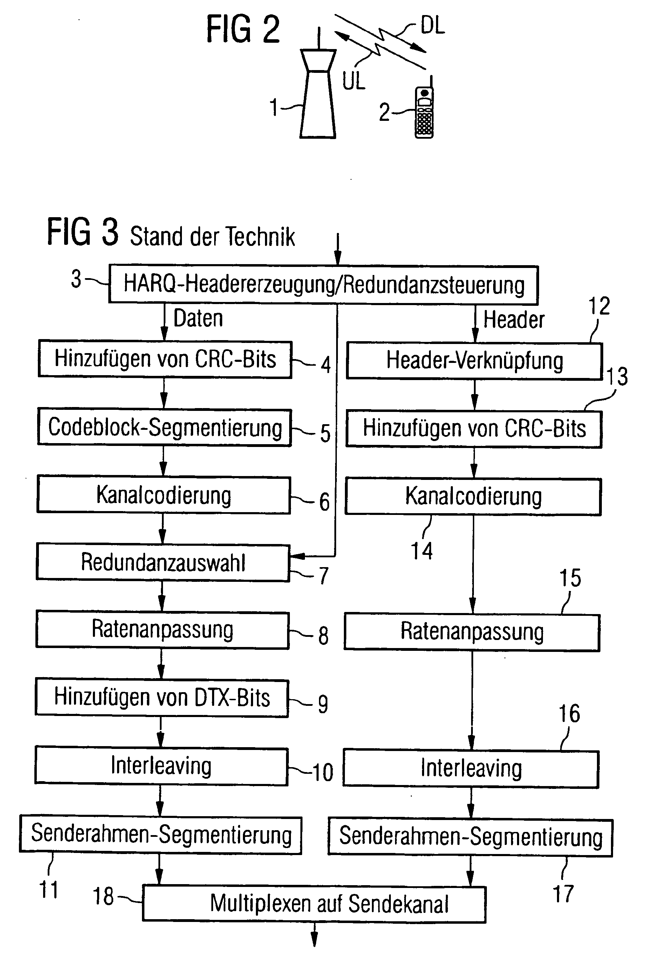

In Fig. 3 ist die Signalverarbeitung für das gemäß dem derzeitigen Stand der UMTS-Standardisierung diskutierte Hybrid-ARQ-Verfahren dargestellt.

Wie in Fig. 3 gezeigt ist, ist die Erzeugung des Übertragungssignals in die Verarbeitung der eigentlichen Daten und die Verarbeitung der Headerinformationen untergliedert. Auf der Headerseite werden die von einem Funktionsblock 3 erzeugten Headerinformationen einem Funktionsblock 12 zugeführt, welcher dafür sorgt, dass sämtliche Header von allen Datenpaketen, die in dem selben Funkpaket gesendet werden sollen, zu einem einzigen Header zusammengefasst werden (sog. "Header Concatenation"). Ein Funktionsblock 13 fügt den daraus resultierenden Headerinformationen CRC-Bits zur Fehlererkennung hinzu. Anschließend wird von einem Funktionsblock 14 eine Kanalcodierung und von einem Funktionsblock 15 eine Ratenanpassung des daraus resultierenden Bitstroms zugeführt. Ein Interleaver 16 bewirkt, dass die ihm zugeführten Symbole bzw. Bits auf bestimmte Art und Weise angeordnet und zeitlich gespreizt werden. Die von dem Interleaver 16 ausgegebenen Datenblöcke werden von einem Funktionsblock 17 den einzelnen Sende- bzw. Funkrahmen zugeordnet (sog. "Radio Frame Segmentation").

Auf der Datenseite ist ebenso ein Funktionsblock 4 zum Hinzufügen von CRC-Bits vorgesehen. Ein Funktionsblock 5 dient zur Aufspaltung der einem Kanalcodierer 6 zugeführten Daten derart, dass von dem Kanalcodierer 6 stets eine auf eine bestimmte Bitanzahl beschränkte Codierung durchgeführt werden kann.

Durch die von dem Kanalcodierer 6 durchgeführte Kanalcodierung wird den eigentlich zu sendenden Daten redundante Information hinzugefügt. Das hat zur Folge, dass mehrere nacheinander gesendete Datenpakete Bits mit gleichem Informationsursprung aufweisen. Bei dem Hybrid-ARQ-Verfahren (gemäß dem sogenannten Typ II und III) wird bei einem fehlerhaften Empfang bzw. einer fehlerhaften Decodierung eines Datenpakets durch den Empfänger nicht dasselbe Datenpaket noch einmal von dem Sender an den Empfänger gesendet, sondern der Sender überträgt ein Datenpaket, welches zumindest teilweise Bits mit dem gleichem Informationsursprung wie die in dem ursprünglich übertragenen Datenpaket enthaltenen Bits aufweist. Der Empfänger kann durch gemeinsame Auswertung aller Datenpakte, welche Bits mit demselben Informationsursprung aufweisen, die ursprünglich gesendeten Informationen mit besserer Qualität wiedergewinnen.

Zur Durchführung des zuvor beschriebenen Hybrid-ARQ-Verfahrens ist es erforderlich, dass bei Vorliegen einer entsprechenden Anforderung des Empfängers aus dem gleichen Informationsursprung die Datenübertragungssignale mit "inkrementeller Redundanz", welche in das ursprünglich gesendete Datenpaket und die entsprechenden Wiederholungsdatenpakete eingehen, generiert werden (sogenannte "Redundancy Selection"). Zu diesem Zweck ist nach dem Kanalcodierer 6 ein entsprechender Funktionsblock 7 vorgesehen, welcher von dem Funktionsblock 3 als Kontrollinstanz gesteuert wird und nach der Kanalcodierung eine entsprechende Bitselektion durchführt. Auf diese Weise werden von dem Funktionsblock 7 in Abhängigkeit von der Ansteuerung durch den Funktionsblock 3 die im ersten Paket sowie in Wiederholungsdatenpaketen zu sendenden Bits selektiert.

Die von dem Funktionsblock 7 ausgegebenen Daten werden einem Funktionsblock 8 zugeführt, welcher durch Ausblenden bzw. Weglassen einzelner Bits (sog. Punktierung) oder Wiederholen einzelner Bits (sog. Repetierung) die Bitrate des Datenstroms einstellt. Von einem anschließenden Funktionsblock 9 können dem Datenstrom sogenannte DTX-Bits ("Discontinuous Transmission") hinzugefügt werden. Des weiteren sind auch auf der Datenseite Funktionsblöcke 10 und 11 vorgesehen, welche dieselbe Funktionen wie die auf der Headerseite vorgesehenen Funktionsblöcke 16 und 17 wahrnehmen.

Abschließend werden die auf der Daten- und Headerseite ausgegebenen Bits von einem Funktionsblock 18 auf den jeweils vorhandenen physikalischen Übertragungs- bzw. Sendekanal abgebildet bzw. gemultiplext (sog. "Multiplexing").

Für ein möglichst leistungsfähiges Hybrid- oder "Incremental Redundancy"-ARQ-Verfahren ist die FEC-Codierung der unterschiedlichen Datenwiederholungspakete möglichst so zu wählen, dass diese Datenpakete typischerweise eine geringe Identität bzw. Übereinstimmung untereinander aufweisen. Dies ist insbesondere bei UMTS aufgrund der hohen Flexibilität der durchgeführten Kanalcodierung und Datenanpassung bezüglich der einzelnen Übertragungskanäle problematisch, insbesondere da die Kanalcodierung nicht ausschließlich hinsichtlich ihrer Leistungsfähigkeit optimiert werden kann. Es spielen dabei auch andere Faktoren, wie beispielsweise der Speicherbedarf und die Komplexität der ausgeführten Algorithmen, eine wesentliche Rolle, wobei dies insbesondere die auf Seiten der Mobilstation ausgeführten Algorithmen betrifft.

Allgemein besteht bei dem anhand Fig. 3 erläuterten Hybrid-ARQ-Verfahren das Problem, ein ursprünglich gesendetes Datenpaket sowie gegebenenfalls ein oder mehrere nachfolgend gesendete Wiederholungsdatenpakete zur Erzielung einer möglichst hohen Güte möglichst günstig zu codieren.

Aus der technischen Spezifikation ETSI TS 125 212 V3.5.0 (2000-12) "Multiplexing and channel coding (FDD) (3GPP TS 25.212 version 3.5.0 Release 1999) sind Verfahren zur Bitratenanpassung von mittels einer Bitseparation generierten parallelen Bitströmen bekannt.

Aus der technischen Spezifikation ETSI TS 125 322 V3.5.0 (2000-12) "RLC protocol specification" (3GPP TS 25.322 version 3.5.0 Release 1999) ist hingegen in Kapitel 4.2.1 das Modell der so genannten RLC-Schicht (Radio Link Control Layer) bekannt, bei dem nach einem unbestätigten und einem bestätigten Modus unterschieden wird.

Der vorliegenden Erfindung liegt daher die Aufgabe zugrunde, ein Verfahren sowie eine entsprechend ausgestaltete Vorrichtung zur Datenübertragung gemäß einem Hybrid-ARQ-Verfahren vorzuschlagen, womit das Prinzip eines Hybrid-ARQ-Verfahrens mit erhöhter Flexibilität und besserer Ausnutzung des möglichen Codierungsgewinns ohne nennenswerte Erhöhung der Komplexität sowie des Speicherbedarfs realisiert werden kann.

Diese Aufgabe wird erfindungsgemäß durch ein Verfahren mit den Merkmalen des Patentanspruchs 1, sowie durch eine Vorrichtung nach Patentanspruch 12 mit Mitteln zur Durchführung des erfindungsgemäßen Verfahrens gelöst. Abhängige Patentansprüche definieren jeweils bevorzugte und vorteilhafte Ausführungsformen der vorliegenden Erfindung.

Das erfindungsgemäße Verfahren zur Datenübertragung gemäß einem Hybrid-ARQ-Verfahren weist die folgenden Schritte auf:
- von einem Sender werden Daten in Form von Datenpaketen an einen Empfänger übertragen,
- von dem Sender wird nach dem Senden eines Datenpakets bei Vorliegen einer entsprechenden Aufforderung des Empfängers mindestens ein Wiederholungsdatenpaket an den Empfänger übertragen, wobei das Wiederholungsdatenpaket und das ursprünglich gesendete Datenpaket Bits mit gleichem Informationsursprung aufweisen,
- zur Auswahl der in dem Datenpaket bzw. dem Wiederholungsdatenpaket zu übertragenden Bits wird eine Bitselektion bezüglich eines kanalcodierten Bitstroms durchgeführt,
- die in dem Datenpaket bzw. dem Wiederholungsdatenpaket zu übertragenden Bits werden einer Bitratenanpassung unterzogen,
- die Bitselektion und die Bitratenanpassung werden gemeinsam dadurch durchgeführt werden, dass die Bits des kanalcodierten Bitstroms in mindestens einen ersten Bitstrom und in einen zweiten Bitstrom aufgeteilt und die einzelnen Bitströme (A-C) jeweils einer separaten Bitratenanpassung unterzogen werden. Gekennzeichnet ist das erfindungsgemäße Verfahren durch folgenden Schritte:
- in dem Datenpaket und dem zumindest einen Wiederholungsdatenpaket wird ein jeweils unterschiedlicher Bitstrom vollständig übertragen, und
- aus demjenigen Bitstrom, dessen Bits in dem aktuell zu übertragenden Datenpaket bzw. Wiederholungsdatenpaket nicht vollständig übertragen werden, wird bereits vor Anwendung der Bitratenanpassung ein Teil der Bits entfernt.

Ein Grundgedanke der vorliegenden Erfindung beruht darauf, die in Fig. 3 gezeigten Funktionsblöcke 7 und 8 zur Redundanzauswahl ("Redundancy Selection") bzw. Ratenanpassung ("Rate Matching") zusammenzufassen, so dass eine leistungsfähigere Codierung erfolgen kann. Dabei werden die Funktionsblöcke 7 und 8 der in Fig. 3 gezeigten Hybrid-ARQ-Struktur insbesondere durch eine Struktur ersetzt, welche eine Bitseparation zur Erzeugung mehrerer (unterschiedlich codierter) paralleler Bitströme mit anschließender Bitkollektion durchführt. Die unterschiedlichen Bitströme werden einer voneinander unabhängigen Ratenanpassung unterzogen. Auf diese Weise wird bei der Codierung eine höhere Flexibilität erzielt. Pro zu übertragendes Datenpaket bzw. Wiederholungsdatenpaket können die unterschiedlichen parallelen Bitströme vorzugsweise anteilig miteinander kombiniert werden. Dies ist insbesondere bei Bitrepetierung vorteilhaft einsetzbar.

Der Vorteil des erfindungsgemäß vorgeschlagenen Verfahrens bzw. der entsprechenden Vorrichtung ist eine höhere Flexibilität und bessere Ausnutzung des möglichen Codierungsgewinns, wobei zudem eine weniger auf Repetierung basierende Ratenanpassung ohne nennenswerte Erhöhung der Komplexität sowie des (insbesondere für die Durchführung des Interleaving benötigten) Speicherbedarfs erzielt werden kann.

In den abhängigen Patentansprüchen sind bevorzugte Ausführungsbeispiele der vorliegenden Erfindung beschrieben, welche insbesondere die Art und Weise der erfindungsgemäß durchgeführten Bitseparation bzw. Bitkollektion sowie die Wahl der Ratenanpassung für die einzelnen unterschiedlichen Bitströme, welche aus der Bitseparation resultieren, betreffen.

Die vorliegende Erfindung wird nachfolgend näher unter Bezugnahme auf die beigefügte Zeichnung anhand bevorzugter Ausführungsbeispiele einer paketorientierten Datenübertragung in einem Mobilfunksystem erläutert, wobei die vorliegende Erfindung selbstverständlich nicht auf Mobilfunksysteme beschränkt ist, sondern allgemein in jeder Art von Kommunikationssystemen eingesetzt werden kann, in dem ein Hybrid-ARQ-Verfahren zur Datenübertragung vorgesehen ist.
Fig. 1 zeigt eine Darstellung zur Verdeutlichung der Signalverarbeitung gemäß einem insbesondere paketorientierten Hybrid-ARQ-Verfahren der vorliegenden Erfindung,
Fig. 2 zeigt eine Darstellung zur Verdeutlichung der Kommunikation in einem Mobilfunksystem, und
Fig. 3 zeigt eine Darstellung zur Verdeutlichung der Signalverarbeitung gemäß einem herkömmlichen paketorientierten Hybrid-ARQ-Verfahren.

Wie bereits zuvor erläutert worden ist, wird nachfolgend davon ausgegangen, dass mit Hilfe der vorliegenden Erfindung eine paketorientierte Datenübertragung in einem Mobilfunksystem, wie es beispielsweise schematisch in Fig. 2 gezeigt ist, realisiert werden soll. Dabei ist in Fig. 2 beispielhaft die Kommunikation zwischen einer Basisstation 1 und einer Mobilstation 2 eines Mobilfunksystems, beispielsweise eines UMTS-Mobilfunksystems, dargestellt. Die Übertragung von Informationen von der Basisstation 1 zu der Mobilstation 2 erfolgt über den sogenannten "Downlink"-Kanal DL, während die Übertragung der Informationen von der Mobilstation 2 zu der Basisstation 1 über den sogenannten "Uplink"-Kanal UL erfolgt. Die vorliegende Erfindung wird nachfolgend beispielhaft anhand einer paketorientierten Datenübertragung von der Basisstation 1 an die Mobilstation 2, d.h. anhand einer paketorientierten Datenübertragung über den "Downlink"-Kanal, erläutert, wobei die vorliegende Erfindung jedoch analog auf eine Datenübertragung über den "Uplink"-Kanal anwendbar ist. Des weiteren wird die vorliegende Erfindung nachfolgend analog zu Fig. 3 anhand der in dem jeweiligen Sender durchzuführenden Signalverarbeitungsmaßnahmen erläutert, wobei jedoch zu beachten ist, dass in dem jeweiligen Empfänger zur Auswertung der auf diese Weise senderseitig verarbeiteten Daten eine entsprechende Signalverarbeitung in umgekehrter Reihenfolge erforderlich ist, so dass von der vorliegenden Erfindung nicht nur die Senderseite, sondern auch die Empfängerseite betroffen ist.

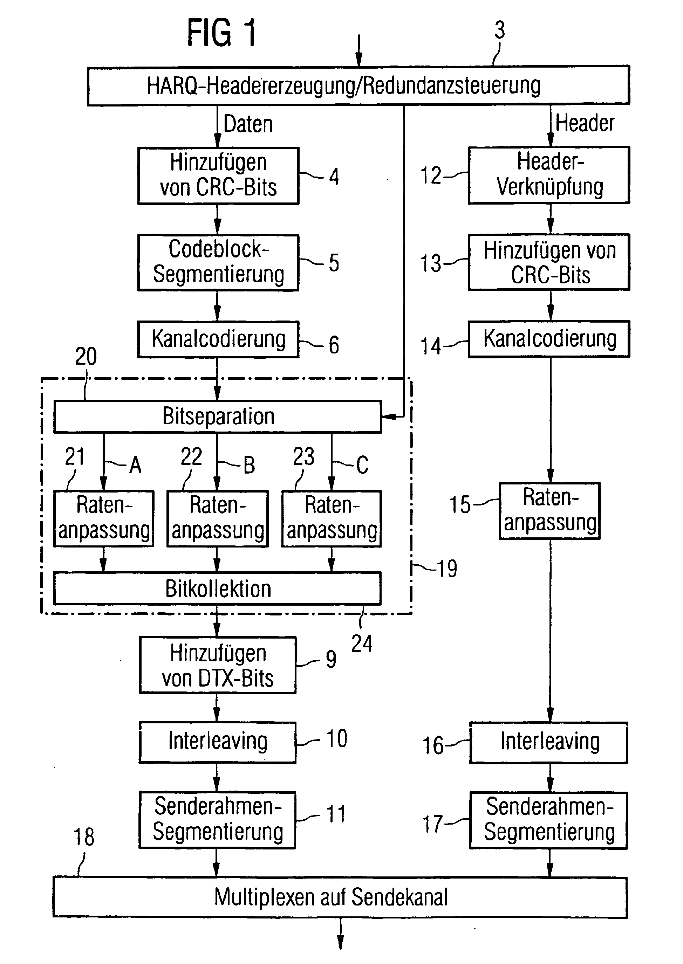

In Fig. 1 ist die Signalverarbeitung der in Datenpaketen zu übertragenden Daten und Headerinformationen nach einem erfindungsgemäßen Hybrid-ARQ-Verfahren dargestellt. Die vorliegende Erfindung betrifft im wesentlichen die Verarbeitung des Datenteils, so dass die in Fig. 1 dargestellten Funktionsblöcke 12 - 17, welche den Headerteil betreffen, den in Fig. 3 dargestellten Funktionsblöcken 12 - 17 entsprechen. Ebenso entsprechen die in Fig. 1 gezeigten Funktionsblöcke 3 - 6 sowie 9 - 11 und 18 den entsprechenden in Fig. 3 dargestellten Funktionsblöcken, so dass hinsichtlich der Aufgabe und Funktion dieser Funktionsblöcke auf die obigen Erläuterungen zu Fig. 3 verwiesen werden kann.

Wie aus Fig.1 ersichtlich ist, wurden die in Fig. 3 dargestellten Funktionsblöcke 7 und 8 durch einen neuen Funktionsabschnitt 19 ersetzt. Dieser Funktionsabschnitt 19 umfasst einen Funktionsblock 20, welcher in Abhängigkeit von einer Ansteuerung durch den Funktionsblock 3 die von dem vorgeschalteten Kanalcodierer 6 ausgegebenen codierten Bits auf mindestens zwei parallele Bitströme aufteilt, welche jeweils separat, d.h. unabhängig voneinander, einer Ratenanpassung unterzogen werden. In Fig. 1 sind diesbezüglich drei Bitströme dargestellt, wobei für jeden Bitstrom ein Funktionsblock 21 - 23 zur Durchführung einer Ratenanpassung, d.h. zur Punktierung oder Repetierung einzelner Bits, vorgesehen ist. Auf diese Weise entstehen mehrere unterschiedlich codierte parallele Bitströme, welche einem weiteren Funktionsblock 24 zugeführt werden. Dieser weitere Funktionsblock 24 hat die Aufgabe, die einzelnen Bits der parallelen Bitströme in derselben Reihenfolge, welche von dem Funktionsblock 20 für die Bitseparation, d.h. für die Aufteilung auf die einzelnen parallelen Bitströme, verwendet worden ist, aufzusammeln. Auf diese Weise wird sichergestellt, dass sich insgesamt die Reihenfolge der nach der Ratenanpassung übrig gebliebenen Bits nicht verändert.

Wird pro Datenpaket exklusiv einer dieser mehreren parallelen Bitströme selektiert, so ist die Signalverarbeitung gemäß Fig. 1 in die Signalverarbeitung gemäß Fig. 3 überführbar. Es ist jedoch ersichtlich, dass mit Hilfe der in Fig. 1 dargestellten Signalverarbeitung eine erhöhte Flexibilität bei der Codierung erzielt werden kann. Insbesondere können pro Datenpaket die unterschiedlichen parallelen Bitströme anteilig miteinander kombiniert werden, wobei dies besonders vorteilhaft bei Bitrepetierung einsetzbar ist. So kann beispielsweise anstelle der Anwendung einer reinen Wiederholungscodierung auf einen einzigen Bitstrom, wie es bei der in Fig. 3 dargestellten Wiederholungscodierung der Fall wäre, bei der in Fig. 1 gezeigten Signalverarbeitung der Bitstrom A unverändert, d.h. ohne Durchführung einer Ratenanpassung, übertragen werden, wobei zugleich der in Fig. 1 gezeigte Bitstrom B mit entsprechender Ratenanpassung zum Auffüllen des verbleibenden Sendesignals verwendet werden kann. Insbesondere kann die Aufteilung der Bits des kanalcodierten Bitstroms auf die einzelnen Bitströme A-C derart gewählt werden, dass für ein Daten- bzw. Wiederholungsdatenpaket Nr. N nur Bits der Bitströme 1 bis N verwendet werden. Dies ist nach dem in Fig. 3 gezeigten Stand der Technik nicht möglich und wird erst durch das erfindungsgemäß vorgeschlagene Prinzip, wie es beispielhaft in Fig. 1 gezeigt ist, realisierbar. Diese Ausführungsvariante hat den Vorteil, dass im Empfänger zum Empfang des Wiederholungsdatenpaketes Nr. N nur Speicher für N Bitblöcke reserviert werden muss, da a priori bekannt ist, dass die Empfangsdaten nur aus diesen N Bitblöcken stammen. Etwas allgemeiner kann auch ein Schema entworfen werden, bei dem die Anzahl der für die Wiederholungsdatenpakete 1 bis N verwendeten Bitblöcke monoton oder sogar streng monoton mit N zunimmt.

Nachfolgend sollen bevorzugte Ausführungsbeispiele für die von den Funktionsblöcken 20 bzw. 24 durchgeführte Bitseparation bzw. Bitkollektion sowie für die von den Funktionsblöcken 21 - 23 durchgeführte Ratenanpassung erläutert werden.

Hinsichtlich der Wahl der parallelen Ratenanpassungsmuster, welche von den Funktionsblöcken 21 und 22 sowie gegebenenfalls 23 realisiert werden, kann vorgesehen sein, diese derart zu wählen, dass von dem gesamten Funktionsabschnitt 19 eine Funktion ausgeführt wird, welche äquivalent zu der von den in Fig. 3 gezeigten Funktionsblöcken 7 und 8 ausgeübten Funktion gemäß dem derzeitigen Stand der Spezifikation ist.

Ebenso können die Datenpakete bei Repetierung mit Daten aus mehr als zwei parallelen Bitströmen A - C derart aufgefüllt werden, dass die Bits eines Bitstroms bzw. Zweigs zu 100%, d.h. unverändert, übertragen werden, während die Bits der anderen Bitströme bzw. Zweige die restlichen Daten ausfüllen. Gemäß einem weiteren Ausführungsbeispiel können die Ratenanpassungsmuster auch derart gewählt sein, dass die Datenpakete bei Repetierung mit Daten aus genau zwei parallelen Bitströmen aufgefüllt werden, wobei der eine Bitstrom zu 100%, d.h. unverändert, übertragen wird, während der andere Bitstrom die restlichen Daten auffüllt.

Die Funktionsweise der Funktionsblöcke 20 und 24 kann derart gewählt sein, dass ein zu sendendes Originaldatenpaket stets Daten des Bitstroms A oder - falls die Daten des Bitstroms A bereits zu 100% übertragen werden - Daten der Bitströme A und B enthält. Für das erste Wiederholungsdatenpaket werden dann bevorzugt Daten des Bitstroms B oder - falls die Daten des Bitstroms B bereits zu 100% übertragen werden - Daten des Bitstroms B und A verwendet. Für das zweite Wiederholungsdatenpaket ist es besonders vorteilhaft, Daten des Bitstroms C oder - falls die Daten des Bitstroms C bereits zu 100% übertragen werden - Daten der Bitströme C und B zu verwenden.

Allgemein ist es das Ziel, durch Kombinationen den Speicher in der Mobilstation 2 möglichst effizient zu nutzen und damit Daten in den Datenpaketen hinsichtlich ihres Ursprungs möglichst nicht zu stark zu streuen. Darüber hinaus soll ein möglichst hoher Gewinn bei der Codierung ausgenutzt werden können.

Nachfolgend wird eine optimale Wahl bezüglich des Speicherbedarfs der Mobilstation 2 erläutert, wobei das nachfolgend beschriebene Ausführungsbeispiel einen Kompromiss zwischen dem Speicherbedarf und der zu erwartenden Leistungsfähigkeit darstellt. Gemäß diesem Ausführungsbeispiel werden zu wiederholende bzw. zu repetierende Bits nur aus solchen Zweigen bzw. Bitströmen ausgewählt, deren Daten auch nach dem Stand der Technik gemäß Fig. 3 bereits übertragen werden, wodurch ein erhöhter Speicherbedarf, insbesondere im Empfänger, vermieden wird. Das Originaldatenpaket enthält gemäß diesem Ausführungsbeispiel ausschließlich Daten des Bitstroms A. Das erste Wiederholungsdatenpaket enthält Daten des Bitstroms B oder - falls die Daten des Bitstroms B bereits zu 100% übertragen werden - Daten der Bitströme B und A. Insoweit stimmt dieses Ausführungsbeispiel mit dem zuvor beschriebenen Ausführungsbeispiel überein. Im Gegensatz zu dem zuvor beschriebenen Ausführungsbeispiel enthält jedoch das zweite Wiederholungsdatenpaket Daten des Bitstroms C oder - falls die Daten des Bitstroms C bereits zu 100% übertragen werden - Daten des Bitstroms C sowie des Bitstroms B und/oder des Bitstroms A.

Allgemein ist es günstig, wenn nach genau einer angeforderten Wiederholung in etwa gleich viele Bits der Bitströme A und B übertragen werden. Nach genau zwei angeforderten Wiederholungen sollten in etwa gleich viele Bits der Bitströme A, B und C übertragen werden.

Selbstverständlich lassen sich alle im Rahmen der vorliegenden Patentanmeldung beschriebenen Ausführungsbeispiele allgemein auch auf mehr als zwei Wiederholungen anwenden.

Gemäß einer weiteren Variante der vorliegenden Erfindung kann nach der Codierung durch den Kanalcodierer 6 von denjenigen Zweigen bzw. Bitströmen A-C, die nicht primär zur Übertragung anstehen, ein großer Teil der Daten punktiert werden, da durch die nachfolgende Ratenanpassung ohnehin von diesen Bitströmen nur ein kleiner Anteil (typischerweise z. B. 10%) der zu übertragenden Bits ausgewählt wird. Es ist daher unschädlich, wenn sofort 90% der Bits dieser Zweige bzw. Bitströme gelöscht wird. Durch diese Maßnahme wird bei den zwischengeschalteten Funktionsblöcken entsprechend weniger Speicherplatz benötigt, so dass diese Variante primär auf eine weitere Verringerung des Speicherbedarfs abzielt.

Zur zuletzt genannten Variante ist die nachfolgend beschriebene Variante äquivalent. Anstelle der Auswahl eines bestimmten Bitstroms (z.B. des Bitstroms B) mit anschließender Punktierung zu 90% können auch statt dieses Bitstroms zwei Bitströme eingeführt werden (z.B. Bitstrom B' und Bitstrom B"), wobei der eine Bitstrom (B') 10% der Bits des ursprünglichen Bitstroms (B) enthält.

### Bezugszeichenliste

- 1: Basisstation
- 2: Mobilstation
- 3: Funktionsblock zur HARQ-Headererzeugung und Redundanzsteuerung
- 4,13: Funktionsblock zum Hinzufügen von CRC-Bits
- 5: Funktionsblock zur Codeblock-Segmentierung
- 6,14: Funktionsblock zur Kanalcodierung
- 7: Funktionsblock zur Redundanzauswahl
- 8,15, 21-23: Funktionsblock zur Ratenanpassung
- 9: Funktionsblock zum Hinzufügen von DTX-Bits
- 10,16: Funktionsblock zum Interleaving
- 11,17: Funktionsblock zur Senderahmen-Segmentierung
- 18: Funktionsblock zum Multiplexen auf einen Sendekanal
- 19: Funktionsabschnitt zur Redundanzauswahl und Ratenanpassung
- 20: Funktionsblock zur Bitseparation
- 24: Funktionsblock zur Bitkollektion
- 25: A-C Bitstrom
- 26: DL "Downlink"-Kanal
- UL ": Uplink"-Kanal

## Patentansprüche

1. Verfahren zur Datenübertragung gemäß einem Hybrid-ARQ-Verfahren,
- bei dem von dem Sender (1) Daten in Form von Datenpaketen an einen Empfänger (2) übertragen werden,
- bei dem von dem Sender (1) nach dem Senden eines Datenpakets bei Vorliegen einer entsprechenden Aufforderung des Empfängers (2) mindestens ein Wiederholungsdatenpaket an den Empfänger (2) übertragen wird,
- bei dem das Wiederholungsdatenpaket und das ursprünglich gesendete Datenpaket Bits mit gleichem Informationsursprung aufweisen,
- bei dem zur Auswahl der in dem Datenpaket bzw. dem Wiederholungsdatenpaket zu übertragenden Bits eine Bitselektion bezüglich eines kanalcodierten Bitstroms durchgeführt wird,
- bei dem die in dem Datenpaket bzw. dem Wiederholungsdatenpaket zu übertragenden Bits einer Bitratenanpassung unterzogen werden,
- bei dem die Bitselektion und die Bitratenanpassung gemeinsam **dadurch** durchgeführt werden, dass die Bits des kanalcodierten Bitstroms in mindestens einen ersten Bitstrom (A) und in einen zweiten Bitstrom (B, C) aufgeteilt und die einzelnen Bitströme (A-C) jeweils einer separaten Bitratenanpassung unterzogen werden,
**dadurch gekennzeichnet, dass**
- bei dem in dem Datenpaket und dem zumindest einen Wiederholungsdatenpaket ein jeweils unterschiedlicher Bitstrom (A-C) vollständig übertragen wird, und
- bei dem aus demjenigen Bitstrom (C), dessen Bits in dem aktuell zu übertragenden Datenpaket bzw. Wiederholungsdatenpaket nicht vollständig übertragen werden, bereits vor Anwendung der Bitratenanpassung ein Teil der Bits entfernt wird.

2. Verfahren nach Anspruch 1, bei dem so viele Bits vor Anwendung der entsprechenden Bitratenanpassung auf diesen Bitstrom (A-C) aus dem Bitstrom (A-C) gelöscht werden, so dass die Anzahl der verbleibenden Bits dem verfügbaren Speicher der nachfolgender Verarbeitungsstufen angepasst ist.

3. Verfahren nach Anspruch 1, bei dem die Aufteilung der Bits des kanalcodierten Bitstroms derart gewählt wird, dass das ursprünglich gesendete Datenpaket Bits des ersten Bitstroms (A) und Bits des zweiten Bitstroms (B) enthält.

4. Verfahren nach einem der vorhergehenden Ansprüche, bei dem die Aufteilung der Bits des kanalcodierten Bitstroms derart gewählt wird, dass das Wiederholungsdatenpaket Bits des zweiten Bitstroms (B) enthält.

5. Verfahren nach einem der vorhergehenden Ansprüche, bei dem die Aufteilung der Bits des kanalcodierten Bitstroms derart gewählt wird, dass das Wiederholungsdatenpaket Bits des zweiten Bitstroms (B) und Bits des ersten Bitstroms (A) enthält.

6. Verfahren nach einem der vorhergehenden Ansprüche,
- bei dem die Bits des kanalcodierten Bitstroms mindestens in einen ersten Bitstrom (A), einen zweiten Bitstrom (B) und einen dritten Bitstrom (C) aufgeteilt und die einzelnen Bitströme (A-C) jeweils einer separaten Bitratenanpassung unterzogen werden, und
- bei dem die Aufteilung der Bits des kanalcodierten Bitstroms derart gewählt wird, dass ein nach dem ursprünglich gesendeten Datenpaket und dem Wiederholungsdatenpaket gesendetes weiteres Wiederholungsdatenpaket, welches Bits mit dem gleichen Informationsursprung wie das ursprünglich gesendete Datenpaket und das Wiederholungsdatenpaket aufweist, Bits des dritten Bitstroms (C) enthält.

7. Verfahren nach einem der vorhergehenden Ansprüche,
- bei dem die Bits des kanalcodierten Bitstroms mindestens in einen ersten Bitstrom (A), einen zweiten Bitstrom (B) und einen dritten Bitstrom (C) aufgeteilt und die einzelnen Bitströme (A-C) jeweils einer separaten Bitratenanpassung unterzogen werden, und
- bei dem die Aufteilung der Bits des kanalcodierten Bitstroms derart gewählt wird, dass ein nach dem ursprünglich gesendeten Datenpaket und dem Wiederholungsdatenpaket gesendetes weiteres Wiederholungsdatenpaket, welches Bits mit gleichem Informationsursprung wie das ursprünglich gesendete Datenpaket und das Wiederholungsdatenpaket aufweist, Bits des dritten Bitstroms (C) und Bits des zweiten Bitstroms (B) enthält.

8. Verfahren nach einem der vorhergehenden Ansprüche, bei dem die Aufteilung der Bits des kanalcodierten Bitstroms auf die einzelnen Bitströme (A-C), die auf die einzelnen Bitströme (A-C) angewendete Bitratenanpassung und die anschließende Kombination der einzelnen Bitströme (A-C) derart gewählt wird, dass nach der Übertragung des Datenpakets und des Wiederholungsdatenpakets zumindest annähernd gleich viele Bits des ersten Bitstroms (A) und des zweiten Bitstroms (B, C) übertragen worden sind.

9. Verfahren nach einem der vorhergehenden Ansprüche,
- bei dem die Bits des kanalcodierten Bitstroms mindestens in einen ersten Bitstrom (A), einen zweiten Bitstrom (B) und einen dritten Bitstrom (C) aufgeteilt und die einzelnen Bitströme (A-C) jeweils einer separaten Bitratenanpassung unterzogen werden, und
- bei dem die Aufteilung der Bits des kanalcodierten Bitstroms auf die einzelnen Bitströme (A-C), die auf die einzelnen Bitströme (A-C) angewendete Bitratenanpassung derart gewählt wird, dass nach der Übertragung des ursprünglich gesendeten Datenpakets, des Wiederholungsdatenpakets sowie eines weiteren Wiederholungsdatenpakets, welches Bits mit dem gleichen Informationsursprung wie das ursprünglich gesendete Datenpaket und das Wiederholungsdatenpaket aufweist, zumindest annähernd gleich viele Bits des ersten Bitstroms (A), des zweiten Bitstroms (B) und des dritten Bitstroms (C) übertragen worden sind.

10. Verfahren nach einem der vorhergehenden Ansprüche, bei dem das Verfahren in einem Mobilfunksystem durchgeführt wird.

11. Verfahren nach einem der vorhergehenden Ansprüche, bei dem die Aufteilung der Bits des kanalcodierten Bitstroms auf die einzelnen Bitströme (A-C) derart gewählt wird, dass die Anzahl der für Wiederholungsdatenpakete Nr. 1 bis N verwendeten Bitblöcke mit N zunimmt.

12. Vorrichtung zur Datenübertragung gemäß einem Hybrid-ARQ-Verfahren, mit Mitteln zur Durchführung eines Verfahrens nach einem der Ansprüche 1 bis 11.

## Claims

1. Method for data transmission according to a hybrid ARQ method,
- whereby data is transmitted from the transmitter (1) to a receiver (2) in the form of data packets,
- whereby at least one repeat data packet is transferred to the receiver (2) by the transmitter (1) after transmission of a data packet, if a corresponding request is issued by the receiver (2),
- whereby the repeat data packet and the originally transmitted data packet have bits with the same information source,
- whereby a bit selection with regard to a channel-coded bit stream is carried out in order to select the bits to be transferred in the data packet or repeat data packet,
- whereby the bits to be transferred in the data packet or repeat data packet are subjected to bit rate matching,
- whereby the bit selection and the bit rate matching are carried out together, so that the bits of the channel-coded bit stream are separated into at least a first bit stream (A) and a second bit stream (B, C), and the individual bit streams (A-C) are each subjected to a separate bit rate matching process,
**characterised in that**
- a respectively different bit stream (A - C) is completely transmitted in the data packet and the at least one repeat data packet in each instance, and
- whereby a part of the bits is removed from the bit stream (C), the bits of which are not completely transmitted in the data packet and/or repeat data packet currently to be transmitted, even before application of the bit rate matching.

2. Method according to claim 1, in which so many bits are deleted from the bit stream (A-C) before applying the corresponding bit rate matching to said bit stream (A-C), so that the number of remaining bits is matched to the available memory of the subsequent processing stages.

3. Method according to claim 1,
whereby the separation of the bits of the channel-coded bit stream is selected such that the originally transmitted data packet contains bits from the first bit stream (A) and bits from the second bit stream (B).

4. Method according to one of the preceding claims,
whereby the separation of the bits of the channel-coded bit stream is selected such that the repeat data packet contains bits from the second bit stream (B).

5. Method according to one of the preceding claims,
whereby the separation of the bits of the channel-coded bit stream is selected such that the repeat data packet contains bits from the second bit stream (B).

6. Method according to one of the preceding claims,
- whereby the bits of the channel-coded bit stream are separated at least into a first bit stream (A), a second bit stream (B), and a third bit stream (C), and the individual bit streams (A-C) are each subjected to a separate bit rate matching process, and
- whereby the separation of the bits of the channel-coded bit stream is selected such that a further repeat data packet, transmitted after the originally transmitted data packet and the repeat data packet, which has bits with the same information source as the originally transmitted data packet and the repeat data packet, contains bits from the third bit stream (C).

7. Method according to one of the preceding claims,
- whereby the bits of the channel-coded bit stream are separated at least into a first bit stream (A), a second bit stream (B), and a third bit stream (C), and the individual bit streams (A-C) are each subjected to a separate bit rate matching process, and
- the separation of the bits of the channel coded bit stream is selected such that a further repeat data packet transmitted after the originally transmitted data packet and the repeat data packet, which has bits with the same information source as the originally transmitted data packet and the repeat data packet, contains bits from the third bit stream (C) and bits from the second bit stream (B).

8. Method according to one of the preceding claims,
whereby the separation of the bits of the channel-coded bit stream into the individual bit streams (A-C), the bit rate matching applied to the individual bit streams (A-C), and the subsequent combination of the individual bit streams (A-C), are selected such that, after the transmission of the data packet and the repeat data packet, the quantities of bits transferred from the first bit stream (A) and the second bit stream (B) are at least roughly the same.

9. Method according to one of the preceding claims,
- whereby the bits of the channel-coded bit stream are separated at least into a first bit stream (A), a second bit stream (B), and a third bit stream (C), and the individual bit streams (A-C) are each subjected to a separate bit rate matching process, and
- the separation of the bits from the channel-coded bit stream onto the individual bit streams (A-C), which bit rate matching is applied to the individual bit streams and selected such that at least approximately the same number of bits from the first bit stream (A), the second bit stream (B) and the third bit stream (C) were transmitted after the transmission of the originally transmitted data packet, of the repeat data packet and a further repeat data packet comprising bits with the same information origin as the originally transmitted data packet and the repeat data packet.

10. Method according to one of the preceding claims, whereby the method is executed in a mobile radio system.

11. Method according to one of the preceding claims, whereby the separation of the bits of the channel-coded bit stream into the individual bit streams (A-C) is selected such that the number of bit blocks used for repeat data packets No. 1 to N increases with N.

12. Device for data transmission according to a hybrid ARQ method, with means for implementing a method according to one of claims 1 to 11.

## Revendications

1. Procédé de transmission de données selon un procédé ARQ hybride,
- dans lequel des données sont transmises par l'émetteur (1) à un récepteur (2) sous forme de paquets de données,
- dans lequel, après l'émission d'un paquet de données, au moins un paquet de données de répétition est transmis par l'émetteur (1) au récepteur (2) lorsqu'une demande correspondante du récepteur (2) est présente,
- dans lequel le paquet de données de répétition et le paquet de données émis initialement présentent des bits ayant la même origine d'information,
- dans lequel, pour sélectionner les bits à transmettre dans le paquet de données resp. dans le paquet de données de répétition, une sélection de bits est réalisée en ce qui concerne un flux de bits codé en canal,
- dans lequel les bits à transmettre dans le paquet de données resp. dans le paquet de données de répétition sont soumis à une adaptation du débit binaire,
- dans lequel la sélection de bits et l'adaptation du débit binaire sont réalisées en commun du fait que les bits du flux de bits codé en canal sont divisés en au moins un premier flux de bits (A) et en un deuxième flux de bits (B, C) et que les flux de bits individuels (A - C) sont respectivement soumis à une adaptation de débit binaire séparée,
**caractérisé en ce que**
- dans le paquet de données et dans l'au moins un paquet de données de répétition, un flux de bits (A - C) respectivement différent est complètement transmis, et
- **en ce que** déjà avant l'application de l'adaptation du débit binaire, une partie des bits est retirée du flux de bits (C), dont les bits ne sont pas complètement transmis dans le paquet de données resp. dans le paquet de données de répétition à transmettre présentement.

2. Procédé selon la revendication 1, dans lequel, avant l'application de l'adaptation du débit binaire correspondante à ce flux de bits (A - C), autant de bits sont supprimés du flux de bits (A - C) de manière à ce que le nombre de bits restants soit adapté à la mémoire disponible des étages de traitement subséquentes.

3. Procédé selon la revendication 1, dans lequel la division des bits du flux de bits codé en canal est sélectionnée de manière à ce que le paquet de données émis initialement contienne des bits du premier flux de bits (A) et des bits du deuxième flux de bits (B).

4. Procédé selon l'une quelconque des revendications précédentes, dans lequel la division des bits du flux de bits codé en canal est sélectionnée de manière à ce que le paquet de données de répétition contienne des bits du deuxième flux de bits (B).

5. Procédé selon l'une quelconque des revendications précédentes, dans lequel la division des bits du flux de bits codé en canal est sélectionnée de manière à ce que le paquet de données de répétition contienne des bits du deuxième flux de bits (B) et des bits du premier flux de bits (A).

6. Procédé selon l'une quelconque des revendications précédentes,
- dans lequel les bits du flux de bits codé en canal sont divisés au moins en un premier flux de bits (A), en un deuxième flux de bits (B) et en un troisième flux de bits (C) et dans lequel les flux de bits individuels (A - C) sont respectivement soumis à une adaptation de débit binaire séparée, et
- dans lequel la division des bits du flux de bits codé en canal est sélectionnée de manière à ce qu'un paquet de données de répétition supplémentaire émis après le paquet de données émis initialement et après le paquet de données de répétition, lequel paquet de données de répétition supplémentaire présente des bits ayant la même origine d'information que le paquet de données émis initialement et que le paquet de données de répétition, contienne des bits du troisième flux de bits (C).

7. Procédé selon l'une quelconque des revendications précédentes,
- dans lequel les bits du flux de bits codé en canal sont divisés au moins en un premier flux de bits (A), en un deuxième flux de bits (B) et en un troisième flux de bits (C) et dans lequel les flux de bits individuels (A - C) sont respectivement soumis à une adaptation de débit binaire séparée, et
- dans lequel la division des bits du flux de bits codé en canal est sélectionnée de manière à ce qu'un paquet de données de répétition supplémentaire émis après le paquet de données émis initialement et après le paquet de données de répétition, lequel paquet de données de répétition supplémentaire présente des bits ayant la même origine d'information que le paquet de données émis initialement et que le paquet de données de répétition, contienne des bits du troisième flux de bits (C) et des bits du deuxième flux de bits (B).

8. Procédé selon l'une quelconque des revendications précédentes, dans lequel la division des bits du flux de bits codé en canal en les flux de bits individuels (A - C), l'adaptation du débit binaire appliquée aux flux de bits individuels (A - C) et la combinaison subséquente des flux de bits individuels (A - C) sont sélectionnées de manière à ce qu'après la transmission du paquet de données et du paquet de données de répétition, au moins approximativement autant de bits du premier flux de bits (A) et du deuxième flux de bits (B, C) aient été transmis.

9. Procédé selon l'une quelconque des revendications précédentes,
- dans lequel les bits du flux de bits codé en canal sont divisés au moins en un premier flux de bits (A), en un deuxième flux de bits (B) et en un troisième flux de bits (C) et dans lequel les flux de bits individuels (A - C) sont respectivement soumis à une adaptation de débit binaire séparée, et
- dans lequel la division des bits du flux de bits codé en canal en les flux de bits individuels (A - C), l'adaptation du débit binaire appliquée aux flux de bits individuels (A - C) sont sélectionnées de manière à ce qu'après la transmission du paquet de données émis initialement, du paquet de données de répétition ainsi que d'un paquet de données de répétition supplémentaire, lequel paquet de données de répétition supplémentaire présente des bits ayant la même origine d'information que le paquet de données émis initialement et que le paquet de données de répétition, au moins autant de bits du premier flux de bits (A), du deuxième flux de bits (B) et du troisième flux de bits (C) aient été transmis.

10. Procédé selon l'une quelconque des revendications précédentes, dans lequel le procédé est réalisé dans un système de radiocommunication mobile.

11. Procédé selon l'une quelconque des revendications précédentes, dans lequel la division des bits du flux de bits codé en canal en les flux de bits individuels (A - C) est sélectionnée de manière à ce que le nombre de blocs de bits utilisé pour les paquets de données de répétition n° 1 à N augmente avec N.

12. Dispositif pour la transmission de données selon un procédé ARQ hybride, comprenant des moyens pour la réalisation d'un procédé selon l'une quelconque des revendications 1 à 11.
